# FASCICULE DE BREVET EUROPEEN

(11) **EP 1 881 212 B1**
(45) Date de publication et mention de la délivrance du brevet: **07.01.2009**
(21) Numéro de dépôt: 07112016.6
(22) Date de dépôt: 09.07.2007
(51) Int. Cl.: F16C 3/20

(54) **Vilebrequin à contrepoids montés en batteurs pour l'amortissement de vibrations transmises au bloc-cylindres d'un moteur à combustion interne**
Gegengewicht-Kurbelwelle, montiert auf Flanschen zur Dämpfung der Schwingungen, die an den Zylinderblock eines Verbrennungsmotors übertragen werden
Crankshaft with balance weight mounted on flanges for absorbing vibration transmitted to the cylinder block of an internal combustion engine

(30) Priorité: 17.07.2006 FR 0652998
(43) Date de publication de la demande: 23.01.2008
(73) Titulaire: PEUGEOT CITROËN AUTOMOBILES S.A., 78140 Vélizy Villacoublay (FR)
(72) Inventeur: Modrak, Gaël, 92600, ASNIERES (FR); Lagache, Jean-Marie, 94240, L'HAY LES ROSES (FR); Travert, Marc, 95250, BEAUCHAMP (FR); Sauvage, Olivier, 92210, SAINT CLOUD (FR); Beaum, Benoît, 78955, CARRIERES SOUS POISSY (FR); Eickhoff, Jean-Marc, 75012, PARIS (FR); Abbadi, Zouhir, 92320, CHATILLON (FR); Tanneau, Olivier, 93400, SAINT-OUEN (FR)
(74) Mandataire: Ménès, Catherine

(56) Documents cités:
- DE-A1- 4 136 331
- US-A1- 4 445 399
- US-A1- 2004 226 393

## Description

La présente invention concerne un vilebrequin destiné à équiper un moteur à combustion interne à plusieurs cylindres d'un véhicule, notamment un véhicule automobile.

Elle vise également un moteur à combustion interne pour véhicule, tel qu'un véhicule automobile, équipé d'un tel vilebrequin.

Le vilebrequin d'un moteur à combustion interne comprend des tourillons coaxiaux destinés à tourner dans des paliers du bloc-cylindres du moteur et des manetons réunis aux tourillons par des bras s'étendant sensiblement perpendiculairement à l'axe longitudinal du vilebrequin et qui sont reliés aux pistons du moteur par l'intermédiaire de bielles.

Le vilebrequin comprend en outre des contrepoids portés par les bras de support des manetons à l'opposé de ces derniers relativement aux tourillons et qui permettent l'équilibrage statique et dynamique des différents ensembles mobiles à manetons, bielles et pistons, comme décrit dans le document DE-A-4136331.

Le vilebrequin est soumis à des efforts importants notamment de flexion transmis au bloc-cylindres du moteur par l'intermédiaire des paliers de ce vilebrequin et si ce dernier est mal équilibré, des vibrations sont produites au niveau des paliers du vilebrequin pouvant engendrer un fléchissement longitudinal de celui-ci et, par conséquent, provoquer la rupture des pièces mécaniques par fatigue. En outre, ces vibrations génèrent des bruits désagréables dans l'habitacle du véhicule.

La présente invention a pour but d'éliminer les inconvénients ci-dessus des vilebrequins connus.

A cet effet, l'invention propose un vilebrequin destiné à équiper un moteur à combustion interne et constitué par un arbre comprenant des tourillons coaxiaux destinés à tourner dans des paliers du bloc-cylindres du moteur, des manetons réunis aux tourillons par des bras s'étendant sensiblement perpendiculairement à l'axe longitudinal de l'arbre et qui sont reliés à des pistons du moteur par l'intermédiaire de bielles, et des contrepoids d'équilibrage portés par les bras à l'opposé des manetons, et qui est caractérisé en ce qu'au moins certains des contrepoids sont montés articulés de manière à pouvoir battre ou vibrer autour de l'articulation dans une direction sensiblement parallèle à l'axe longitudinal de l'arbre pour amortir les vibrations imposées au vilebrequin par les ensembles à manetons, bielles et pistons du moteur équipé du vilebrequin.

Chaque contrepoids est en forme de flasque à bord externe arqué et l'articulation de chaque contrepoids est constituée par une rainure réalisée dans l'une des faces latérales du flasque.

Un maneton et une paire de flasques de contrepoids sont disposés alternativement de part et d'autre des tourillons et les rainures sont formées dans les faces latérales externes de chaque paire de flasques.

Selon une variante de réalisation, chaque rainure est rectiligne et s'étend suivant une direction sensiblement perpendiculaire à l'axe longitudinal de l'arbre de vilebrequin.

Selon une autre variante de réalisation, chaque rainure est en arc de cercle coaxial à l'axe longitudinal de l'arbre de vilebrequin.

Avantageusement, deux rainures radiales partent extérieurement de la rainure en arc de cercle.

Selon encore une autre variante de réalisation, chaque rainure est en arc de cercle dont la flèche s'étend à l'opposé du bord externe arqué du flasque de contrepoids.

Avantageusement, chaque rainure est garnie d'une matière à propriété d'amortissement et, le cas échéant, de friction.

La matière amortissante est un matériau brut, tel que de l'aluminium, du mica, un polymère haute température, du silicone, de la céramique ou une structure à base de matériau brut, telle qu'un matériau poreux notamment une mousse d'aluminium, des fibres, un feuilleté, un tissu métallique, ou un sandwich.

Les contrepoids d'équilibrage peuvent être rapportés aux bras par frettage d'un insert ou noyau amortissant.

Chaque rainure peut être obtenue par moulage, forgeage ou usinage du vilebrequin.

Selon une variante de réalisation, le vilebrequin comprend, à chaque face latérale du flasque comportant une rainure, une lame flexible s'étendant à plat perpendiculairement de part et d'autre de la rainure en ayant l'une de ses extrémités solidaire de la partie extérieure du contrepoids ou de la partie du contrepoids située du côté de l'axe de rotation du vilebrequin, et son extrémité opposée recourbée élastiquement en appui de frottement sur la face correspondante du contrepoids opposée à la partie extérieure du contrepoids ou à la partie du contrepoids du côté de l'axe de rotation du vilebrequin.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant plusieurs modes de réalisation de l'invention et dans lesquels :
- la figure 1 représente un vilebrequin pour moteur à combustion interne conforme à l'invention ;
- la figure 2 est une vue agrandie de la partie cerclée en II de la figure 1 ;
- la figure 3 est une vue de côté suivant la flèche III de la figure 2 ;
- la figure 4 est une vue de côté suivant la flèche IV de la figure 2 ;
- les figures 5 à 7 représentent une variante de réalisation respectivement des figures 2 à 4 ;
- la figure 8 représente le vilebrequin de l'invention en mode de fonctionnement d'amortissement de vibrations ;
- la figure 9 est un graphe montrant les amplitudes de vibrations en fonction de la fréquence produites par un vilebrequin de l'art antérieur et de l'invention ;
- la figure 10 est une vue en bout d'une variante de réalisation du vilebrequin de l'invention ;
- la figure 11 est une vue en bout d'une autre variante de réalisation du vilebrequin de l'invention ;
- la figure 12 est une vue en bout d'encore une autre variante de réalisation du vilebrequin de l'invention ;
- la figure 13 représente en perspective une variante de réalisation selon laquelle chaque contrepoids peut être rapporté au vilebrequin ; et
- la figure 14 représente en perspective une variante de réalisation permettant un réglage par frottement de l'amortissement des vibrations du vilebrequin.

Le vilebrequin de l'invention va être décrit dans son application à un moteur à combustion interne à plusieurs cylindres d'un véhicule automobile, mais il est bien entendu qu'il peut s'appliquer également à des moteurs à combustion interne utilisés dans d'autres domaines, tels que par exemple le domaine industriel, agricole ou marin.

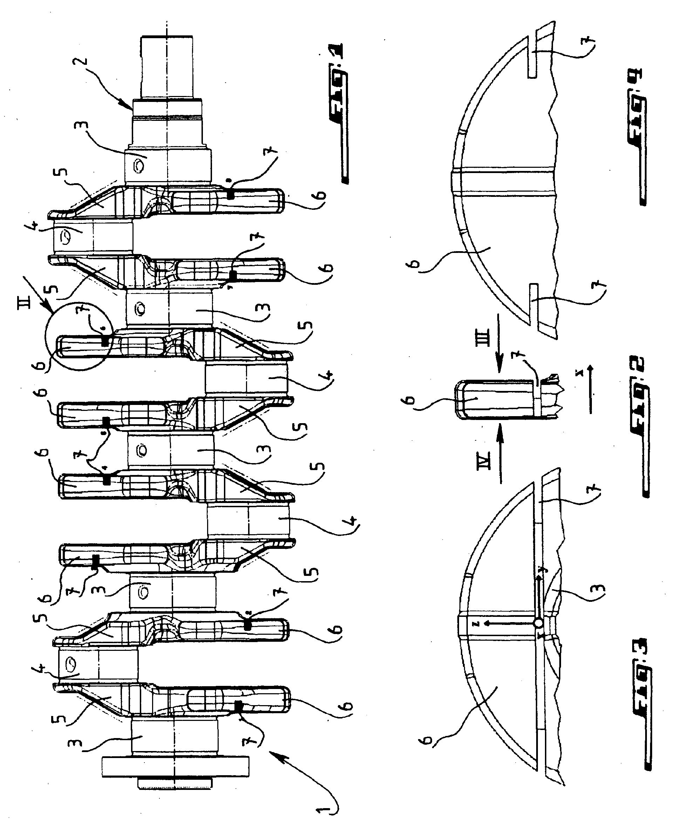

En se reportant aux figures 1 à 4, le vilebrequin 1, qui peut être obtenu par forgeage ou moulage, est constitué par un arbre 2 comprenant des tourillons alignés coaxialement 3, par exemple au nombre de cinq pour un moteur à combustion interne du type à quatre cylindres en ligne, et qui sont destinés à tourner dans des paliers associés, non représentés, du bloc-cylindres du moteur.

L'arbre de vilebrequin 2 comprend en outre des manetons 4 auxquels sont montées les têtes de bielles, non représentées, et qui sont solidaires des tourillons 3 par l'intermédiaire de bras 5 s'étendant sensiblement perpendiculairement à l'axe longitudinal de l'arbre de vilebrequin 2. Les pieds de bielles sont reliés respectivement aux pistons du moteur.

Les bras 5 sont pourvus de contrepoids 6 destinés à l'équilibrage statique et dynamique des ensembles mobiles à manetons 4, bielles et pistons.

Comme cela est connu en soi, chaque contrepoids 6 est formé par un flasque relativement épais perpendiculaire à l'arbre 2 et dont le bord externe est en forme d'arc de cercle coaxial à l'axe longitudinal de l'arbre de vilebrequin 2.

Deux contrepoids 6 sont associés à un maneton opposé 4 et l'équilibrage de l'arbre 2 est réalisé du fait que le maneton 4 et une paire de contrepoids d'équilibrage 6 sont disposés alternativement de part et d'autre des tourillons centraux 3 du vilebrequin 1.

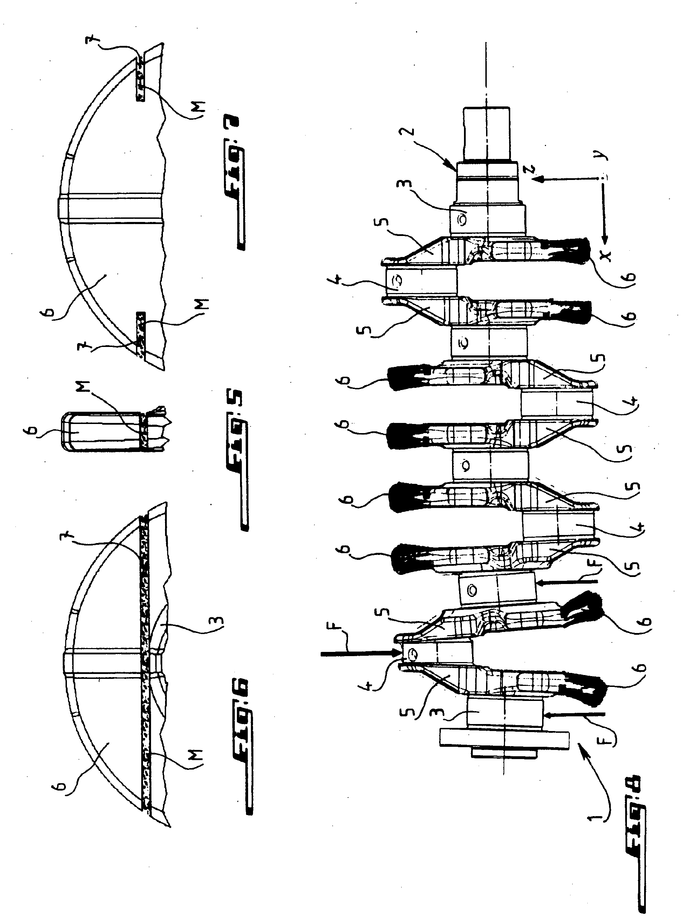

Selon l'invention, certains des contrepoids 6 et de préférence tous ces contrepoids sont pourvus, au voisinage de leurs bases de liaison aux bras 5, de rainures rectilignes 7 réalisées respectivement dans les faces externes des flasques 6 en s'étendant sensiblement perpendiculairement à l'axe longitudinal de l'arbre de vilebrequin 2 et au plan médian longitudinal de ce vilebrequin passant par les manetons 4. Chaque rainure 7 constitue en quelque sorte une articulation permettant à chaque contrepoids 6, lors du fonctionnement du moteur à combustion interne équipé de ce vilebrequin, de battre ou de vibrer autour de cette articulation dans une direction sensiblement parallèle à l'axe de rotation du vilebrequin comme représenté par les parties noircies vibrantes des contrepoids 6 de la figure 8 qui servent ainsi de batteur pour amortir les vibrations imposées au vilebrequin par les explosions dans les chambres de combustion des cylindres du moteur. Cette figure montre que la vibration en rotation autour de l'axe d'articulation perpendiculaire à l'axe du vilebrequin 1 permet d'amortir les « frétillements » du vilebrequin dans ses paliers et permet d'améliorer sensiblement la perception du bruit moteur en en supprimant des composantes de relativement haute fréquence bien connues situées approximativement dans la plage de 3000 à 5000 Hz.

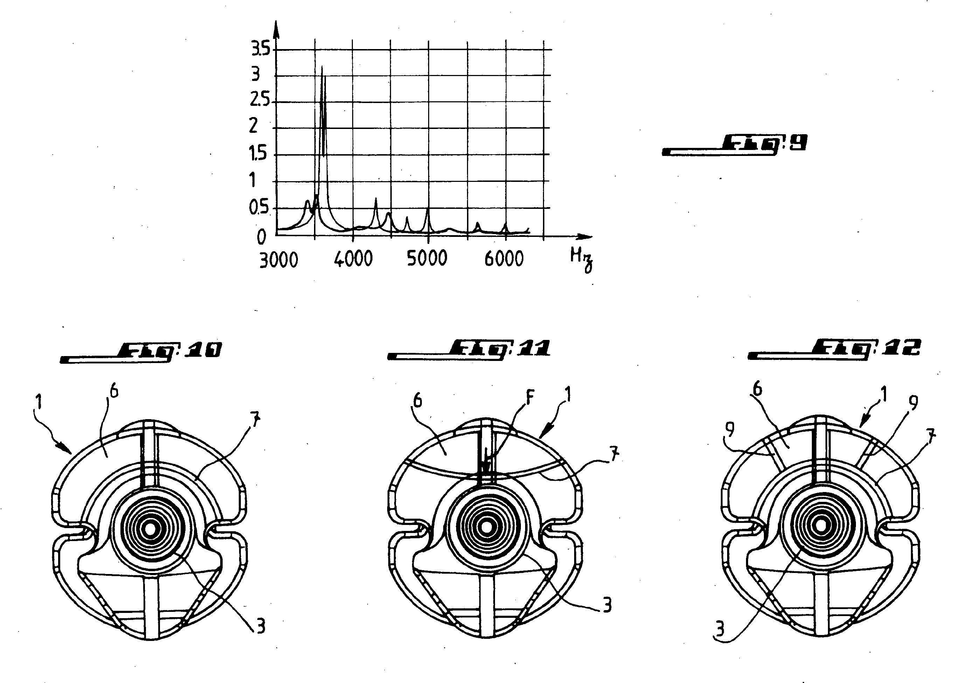

La figure 9 représente les vibrations sur la plage fréquentielles susmentionnées de 3000 à 5000 Hz enregistrées sur les tourillons d'un vilebrequin classique et celles enregistrées sur les tourillons du vilebrequin de l'invention, vibrations résultant des efforts importants que subit le vilebrequin en fonctionnement. Cette figure montre qu'après un réglage convenable de la raideur, liée à la profondeur de chaque rainure 7, et de l'amortissement des articulations des contrepoids 6, les vibrations enregistrées sur les tourillons 3 du vilebrequin de l'invention sont notablement diminuées en amplitude lors du fonctionnement du moteur.

Avantageusement, comme représenté aux figures 5 à 7, chaque rainure 7 peut être garnie d'une matière M à propriété d'amortissement et, le cas échéant, de friction. La matière amortissante 8 peut être un matériau brut, tel que de l'aluminium, du mica, un polymère haute température, du silicone, de la céramique, ou une structure à base de matériau brut, telle qu'un matériau poreux notamment une mousse d'aluminium, des fibres, un feuilleté, un tissu métallique, un sandwich ou analogue. Cette matière peut également être constituée par une combinaison de ces éléments, avec ou sans interface frottant dans la rainure correspondante 7.

La solution de l'invention pour amortir les vibrations transmises par le vilebrequin au bloc-cylindres du moteur n'implique aucune augmentation de masse de ce vilebrequin. Elle n'implique pas de diminution de la résistance mécanique du vilebrequin puisqu'elle introduit une certaine souplesse des contrepoids 6 par la présence des rainures 7 et l'amortissement a lieu en dehors de la zone résistance proprement dite du vilebrequin. Le choix des contrepoids batteurs en rotation autour d'un axe perpendiculaire à l'axe longitudinal du vilebrequin découple naturellement la fonction anti-vibratoire de ces contrepoids de leur fonction normale d'équilibrage. Ce choix rend la régulation anti-vibratoire insensible à l'effet gyroscopique du vilebrequin car les vibrations relatives des contrepoids par rapport à ce vilebrequin sont dans la direction sensiblement parallèle à l'axe de rotation du vilebrequin.

Les figures 10 à 12 représentent trois variantes de réalisation de l'invention procurant les mêmes avantages que la variante de réalisation décrite précédemment. Selon la figure 10, la rainure 7 est en forme d'arc de cercle coaxial à l'axe longitudinal de l'arbre de vilebrequin 2 et s'étend sensiblement sur une demi circonférence. Selon la figure 11, la rainure 7 est également en forme d'arc de cercle mais dont la flèche F s'étend à l'opposé du bord externe arqué du flasque du contrepoids 6, c'est-à-dire vers l'arbre 2. La figure 12 est une variante de réalisation de la figure 10 et selon laquelle deux rainures radiales 9 sont réalisées dans le flasque 6 en partant à l'extérieur de la rainure en arc de cercle 7, les deux rainures 9 étant symétriques au plan médian longitudinal du vilebrequin 1.

Ces différentes rainures, au lieu d'être obtenues par usinage, peuvent également être obtenues par moulage ou forgeage du vilebrequin ou par traitement chimique des flasques du contrepoids correspondant.

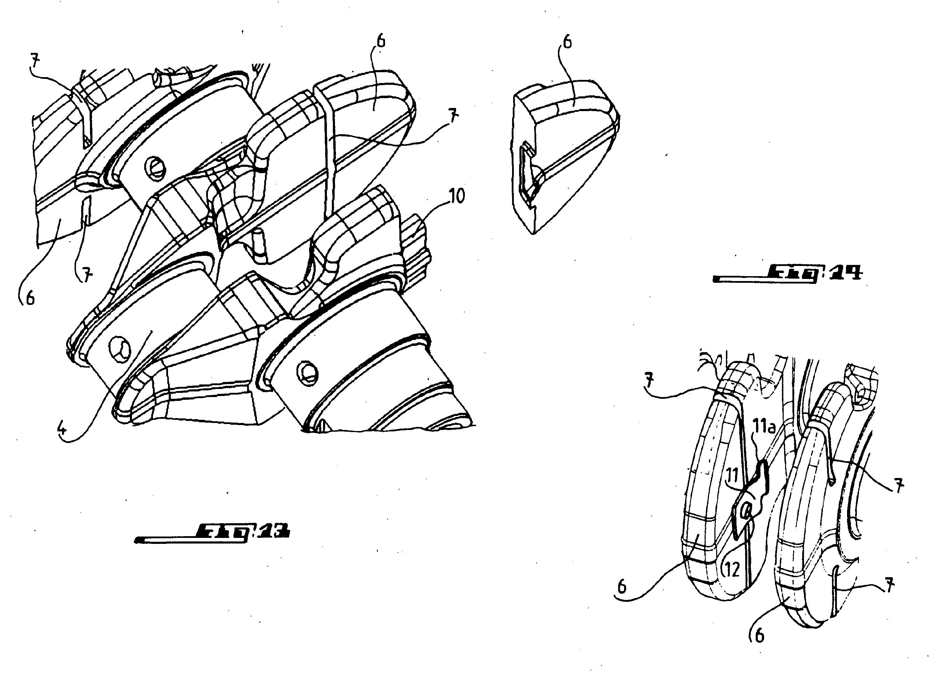

En variante, les contrepoids 6 peuvent être rapportés au bras 5 par frettage de noyaux ou d'inserts amortissants 10 convenablement dimensionnés comme représenté en figure 13.

La figure 14 représente une variante de réalisation permettant de régler l'amortissement des vibrations du vilebrequin 1. Ainsi, cette variante consiste à prévoir sur chaque face latérale du flasque formant contrepoids 6 et comportant une rainure 7, une lame flexible 11 montée de part et d'autre de la rainure 7 transversalement à celle-ci et ayant l'une de ses extrémités solidaire, par exemple à l'aide d'un rivet 12, de la face de la partie du contrepoids qui se situe à l'extérieur du vilebrequin et son extrémité opposée recourbée 11a élastiquement en appui de frottement sur la face de la partie du contrepoids 6 située vers l'axe de rotation du vilebrequin 1, la rainure 7 s'étendant ainsi sous la lame flexible 11 entre le rivet 12 et l'extrémité recourbée 11a de cette lame. La vibration de chaque contrepoids 6 peut être ainsi réglée en tarant convenablement la force élastique d'appui de l'extrémité 11a de chaque lame 11 sur la face plane correspondante du contrepoids 6.

L'invention, en diminuant de façon contrôlée et significative le niveau de sonorité aigue émise à chaque explosion dans les cylindres du moteur à combustion interne, améliore non seulement la perception par le conducteur et les passagers du véhicule du bruit émis par le moteur, mais renforce également l'impression de confort, de feutré, de sécurité et de qualité résultant du vilebrequin de l'invention.

## Revendications

1. Vilebrequin destiné à équiper un moteur à combustion interne et constitué par un arbre (2) comprenant des tourillons coaxiaux (3) destinés à tourner dans des paliers du bloc-cylindres du moteur, des manetons (4) réunis aux tourillons (3) par des bras (5) s'étendant sensiblement perpendiculairement à l'axe longitudinal de l'arbre (2) et qui sont reliés à des pistons du moteur par l'intermédiaire de bielles, et des contrepoids d'équilibrage (6) portés par les bras (5) à l'opposé des manetons (4), **caractérisé en ce qu'**au moins certains des contrepoids (6) sont montés articulés de manière à pouvoir battre ou vibrer autour de l'articulation (7) dans une direction sensiblement parallèle à l'axe longitudinal de l'arbre (2) pour amortir les vibrations imposées au vilebrequin (1) par les ensembles à manetons (4), bielles et pistons du moteur équipé du vilebrequin (1).

2. Vilebrequin selon la revendication 1, **caractérisé en ce que** chaque contrepoids (6) est en forme de flasque à bord externe arqué et l'articulation de chaque contrepoids est constituée par une rainure (7) réalisée dans l'une des faces latérales du flasque (6).

3. Vilebrequin selon la revendication 2, **caractérisé en ce qu'**un maneton (4) et une paire de flasques de contrepoids (6) sont disposés alternativement de part et d'autre des tourillons (3) et les rainures (7) sont formées dans les faces latérales externes de chaque paire de flasques (6).

4. Vilebrequin selon la revendication 2 ou 3, **caractérisé en ce que** chaque rainure (7) est rectiligne et s'étend suivant une direction sensiblement perpendiculaire à l'axe longitudinal de l'arbre de vilebrequin (2).

5. Vilebrequin selon la revendication 2 ou 3, **caractérisé en ce que** chaque rainure (7) est en arc de cercle coaxial à l'axe longitudinal de l'arbre de vilebrequin (2).

6. Véhicule selon la revendication 5, **caractérisé en ce que** deux rainures radiales (9) partent extérieurement de la rainure en arc de cercle (7).

7. Vilebrequin selon la revendication 2 ou 3, **caractérisé en ce que** chaque rainure (7) est en arc de cercle dont la flèche s'étend à l'opposé du bord externe arqué du flasque de contrepoids (6).

8. Vilebrequin selon l'une des revendications 2 à 7, **caractérisé en ce que** chaque rainure (7) est garnie d'une matière (8) à propriété d'amortissement et, le cas échéant, de friction.

9. Vilebrequin selon la revendication 8, **caractérisé en ce que** la matière amortissante (8) est un matériau brut, tel que de l'aluminium, du mica, un polymère haute température, du silicone, de la céramique, ou une structure à base de matériau brut, telle qu'un matériau poreux notamment une mousse d'aluminium, des fibres, un feuilleté, un tissu métallique, un sandwich.

10. Vilebrequin selon la revendication 1, **caractérisé en ce que** les contrepoids d'équilibrage (6) sont rapportés aux bras (5) par frettage d'un insert ou noyau amortissant:

11. Vilebrequin selon l'une des revendications 2 à 10, **caractérisé en ce que** chaque rainure (7) est obtenue par moulage, forgeage ou usinage du vilebrequin (1).

12. Vilebrequin selon l'une des revendications 2 à 11, **caractérisé en ce qu'**il comprend, à chaque face latérale du flasque (6) comportant une rainure (7), une lame flexible s'étendant à plat perpendiculairement de part et d'autre de la rainure (7) en ayant l'une de ses extrémités solidaire de la partie extérieure du contrepoids (6) ou de la partie du contrepoids (6) située du côté de l'axe de rotation du vilebrequin (1) et son extrémité opposée recourbée (11a) élastiquement en appui de frottement sur la face correspondante du contrepoids (6) opposée à la partie extérieure du contrepoids (6) ou à la partie du contrepoids (6) du côté de l'axe de rotation du vilebrequin (1).

13. Moteur à combustion interne pour véhicule, tel qu'un véhicule automobile, **caractérisé en ce qu'**il est équipé d'un vilebrequin (1) conforme à l'une quelconque des revendications précédentes.

## Claims

1. Crankshaft intended to be fitted to an internal combustion engine and consisting of a shaft (2) comprising coaxial journals (3) intended to rotate in bearings belonging to the cylinder block of the engine, crank pins (4) connected to the journals (3) by crank webs (5) running substantially at right angles to the longitudinal axis of the shaft (2) and which are connected to pistons of the engine via connecting rods, and balancing counterweights (6) carried by the crank webs (5) at the opposite end to the crank pins (4), **characterized in that** at least some of the counterweights (6) are mounted in an articulated manner such that they can beat or vibrate about the articulation (7) in a direction substantially parallel to the longitudinal axis of the shaft (2) in order to damp out vibrations imposed on the crankshaft (1) by the crank pin (4), connecting rod and piston assemblies of the engine equipped with the crankshaft (1).

2. Crankshaft according to Claim 1, **characterized in that** each counterweight (6) is in the form of a flange with a bowed external edge and the articulation of each counterweight consists of a groove (7) made in one of the lateral faces of the flange (6).

3. Crankshaft according to Claim 2, **characterized in that** a crank pin (4) and a pair of counterweight (6) flanges are positioned alternately on each side of the journals (3) and the grooves (7) are formed in the external lateral faces of each pair of flanges (6).

4. Crankshaft according to Claim 2 or 3, **characterized in that** each groove (7) is straight and runs in a direction substantially perpendicular to the longitudinal axis of the shaft part of the crankshaft (2).

5. Crankshaft according to Claim 2 or 3, **characterized in that** each groove (7) is in the form of a circular arc coaxial with the longitudinal axis of the shaft part of the crankshaft (2).

6. Crankshaft according to Claim 5, **characterized in that** two radial grooves (9) extend externally from the arc-shaped groove (7).

7. Crankshaft according to Claim 2 or 3, **characterized in that** each groove (7) is in the shape of a circular arc the concave face of which lies opposite the bowed external edge of the counterweight (6) flange.

8. Crankshaft according to one of Claims 2 to 7, **characterized in that** each groove (7) is lined with a material (8) that has damping and, if necessary, friction, properties.

9. Crankshaft according to Claim 8, **characterized in that** the damping material (8) is a raw material, such as aluminium, mica, a high-temperature polymer, silicone, ceramic, or a structure based on a raw material such as a porous material, particularly an aluminium foam, fibres, a laminate, a metallic fabric, a sandwich.

10. Crankshaft according to Claim 1, **characterized in that** the balancing counterweights (6) are attached to the crank webs (5) by the shrink-fitting of a damping insert or core.

11. Crankshaft according to one of Claims 1 to 10, **characterized in that** each groove (7) is obtained by casting, forging or machining the crankshaft (1).

12. Crankshaft according to one of Claims 2 to 11, **characterized in that** it comprises, on each lateral face of the flange (6) that comprises a groove (7), a flexible blade lying flat at right angles to each side of the groove (7) and with one of its ends secured to the exterior part of the counterweight (6) or of the part of the counterweight (6) that lies on the side as the axis of rotation of the crankshaft (1) and with its bent opposite end (11a) pressing elastically so as to rub against the corresponding face of the counterweight (6) namely the opposite part to the exterior part of the counterweight (6) or the part of the counterweight (6) that lies on the same side as the axis of rotation of the crankshaft (1).

13. Internal combustion engine for a vehicle, such as a motor vehicle, **characterized in that** it is equipped with a crankshaft (1) according to any one of the preceding claims.

## Patentansprüche

1. Kurbelwelle, die dazu bestimmt ist, einen Verbrennungsmotor auszustatten und die aus einer Welle (2) besteht, die Koaxialzapfen (3) aufweist, die dazu bestimmt sind, in Lagern des Zylinderblocks des Motors zu drehen, Kurbelzapfen (4), die an den Koaxialzapfen (3) durch Arme (5) vereint sind, die sich im Wesentlichen senkrecht zu der Längsachse der Welle (2) erstrecken, und die mit Kolben des Motors über Pleuel verbunden sind, sowie Gegengewichte (6), die von den Armen (5) den Kurbelzapfen (4) entgegen gesetzt getragen werden, **dadurch gekennzeichnet, dass** mindestens bestimmte der Gegengewichte (6) derart angelenkt installiert sind, dass sie um die Anlenkung (7) in eine Richtung im Wesentlichen parallel zu der Längsachse der Welle (2) ausschlagen oder schwingen können, um die Schwingungen zu dämpfen, die der Kurbelwelle (1) von den Einheiten mit Kurbelzapfen (4), den Pleueln und Kolben des Motors, der mit der Kurbelwelle (1) ausgestattet ist, auferlegt werden.

2. Kurbelwelle nach Anspruch 1, **dadurch gekennzeichnet, dass** jedes Gegengewicht (6) eine Flanschform mit gebogenem Außenrand hat und dass die Anlenkung jedes Gegengewichts aus einer Nute (7) besteht, die in einer der Seitenflächen des Flansches (6) hergestellt ist.

3. Kurbelwelle nach Anspruch 2, **dadurch gekennzeichnet, dass** ein Kurbelzapfen (4) und ein Paar Gegengewichtflansche (6) abwechselnd auf jeder Seite der Koaxialzapfen (3) angeordnet sind, und dass die Nuten (7) in den äußeren Seitenflächen jedes Paars von Flanschen (6) ausgebildet sind.

4. Kurbelwelle nach Anspruch 2 oder 3, **dadurch gekennzeichnet, dass** jede Nute (7) geradlinig ist und sich entlang einer im Wesentlichen senkrechten Richtung zu der Längsachse der Welle der Kurbelwelle (2) erstreckt.

5. Kurbelwelle nach Anspruch 2 oder 3, **dadurch gekennzeichnet, dass** jede Nute (7) einen Kreisbogen bildet, der zu der Längsachse der Welle (2) der Kurbelwelle koaxial ist.

6. Fahrzeug nach Anspruch 5, **dadurch gekennzeichnet, dass** zwei radiale Nuten (9) von außerhalb der Nute in Kreisbogen (7) ausgehen.

7. Kurbelwelle nach Anspruch 2 oder 3, **dadurch gekennzeichnet, dass** jede Nute (7) eine Kreisbogenform hat, deren Krümmung sich entgegen gesetzt zum gebogenen Außenrand des Gegengewichtflanschs (6) erstreckt.

8. Kurbelwelle nach einem der Ansprüche 2 bis 7, **dadurch gekennzeichnet, dass** jede Nute (7) mit einem Material (8) mit dämpfender Eigenschaft und gegebenenfalls Reibungseigenschaft ausgelegt ist.

9. Kurbelwelle nach Anspruch 8, **dadurch gekennzeichnet, dass** das dämpfende Material (8) ein Rohmaterial ist, wie zum Beispiel Aluminium, Mika, ein Hochtemperatur-Polymer, Silikon, Keramik oder eine Struktur auf Rohmaterialbasis, wie zum Beispiel ein poriges Material, insbesondere ein Aluminiumschaum, Fasern, ein Schichtstoff, ein Metallgewebe, eine Sandwichstruktur.

10. Kurbelwelle nach Anspruch 1, **dadurch gekennzeichnet, dass** die Gegengewichte (6) an die Arme (5) durch Frettieren eines Einsatzes oder dämpfenden Kerns angebaut sind.

11. Kurbelwelle nach einem der Ansprüche 2 bis 10, **dadurch gekennzeichnet, dass** jede Nute (7) durch Formen, Schmieden oder Bearbeiten der Kurbelwelle (1) erzielt wird.

12. Kurbelwelle nach einem der Ansprüche 2 bis 11, **dadurch gekennzeichnet, dass** sie auf jeder Seitenfläche des Flansches (6), der eine Nute (7) aufweist, eine biegsame Klinge aufweist, die sich flach senkrecht zu beiden Seiten der Nute (7) erstreckt, und von der ein Ende fest mit dem Außenteil des Gegengewichts (6) oder dem Teil des Gegengewichts (6), der sich auf der Seite der Drehachse der Kurbelwelle (1) befindet, verbunden ist, und ihr entgegen gesetztes Ende in Reibungsauflage auf der entsprechenden Fläche des Gegengewichts (6), die dem Außenteil des Gegengewichts (6) oder dem Teil des Gegengewichts (6) auf der Seite der Drehachse der Kurbelwelle (1) entgegen gesetzt ist, elastisch aufgebogen (11a) hat.

13. Verbrennungsmotor für Fahrzeug, wie zum Beispiel ein Kraftfahrzeug, **dadurch gekennzeichnet, dass** er mit einer Kurbelwelle (1) gemäß einem der vorhergehenden Ansprüche ausgestattet ist.
